# EUROPEAN PATENT APPLICATION

(11) **EP 3 364 550 A1**
(43) Date of publication of application: **22.08.2018**
(21) Application number: 17186059.6
(22) Date of filing: 11.08.2017
(51) Int. Cl.: H04B 5/00, H04B 1/3827

(54) **NEAR FIELD COMMUNICATION RING HAVING A FLAT-BAR FLEXIBLE PRINTED CIRCUIT AND A PROCESSING FLOW THEREOF**

(30) Priority: 17.02.2017 TW 106105303
(71) Applicant: Ting, Shao-Chieh, New Taipei City 220 (TW)
(72) Inventor: Ting, Shao-Chieh, New Taipei City 220 (TW)
(74) Representative: Lang, Christian

(57) **Abstract**

The present invention discloses an NFC ring having a flat-bar FPC and a processing flow thereof, and more particularly to an NFC ring and a processing flow thereof, wherein by providing a flat-bar FPC, the signal transmission and reception effect as well as the anti-interference efficiency can be improved, along with that the processing flow can be simplified to improve the production efficiency and the yield of the product. In addition, the NFC ring can be made more miniaturized, and the data in the NFC ring can be prevented from being stolen by the unique induction method thereof.

## Description

### BACKGROUND OF THE INVENTION

### a) Field of the Invention

The present invention relates to an NFC (Near Field Communication) ring (A0) having a flat-bar FPC (flexible printed circuit) and a processing flow thereof, and more particularly to an NFC ring (A0) and a processing flow thereof, wherein by providing a flat-bar FPC (A2, B2), the signal transmission and reception effect as well as the anti-interference efficiency can be improved, along with that the processing flow can be simplified to improve the production efficiency and the yield of the product. In addition, the NFC ring (A0) can be made more miniaturized, and the data in the NFC ring (A0) can be prevented from being stolen by the unique induction method thereof.

### b) Description of the Prior Art

NFC stands for a near field wireless communication technology and is a kind of non-touchable identification and interconnection technology. By NFC, the near field wireless communication can be performed among a mobile device, a consumable electronic product, a PC (Personal Computer) and a smart control tool. NFC provides a simple and touchable solution, allowing a consumer to exchange information, access contents and services easily and intuitively. As a new communication technology, NFC stands out in many aspects, such as fast data transmission speed, high security, low cost and expended energy. Due to these functions, NFC is given more fantasies; for example, an NFC ring can catch people's attention. However, as the size of a ring is limited, the signal transmission and reception effect is not very perfect.

For an NFC ring sold on the markets, the NFC antenna is normally disposed on a curved surface of the ring as a surrounding coil, and then the outer layer of the ring is packaged. Nevertheless, as the induction area in this method is smaller, the access range is limited and the data can be stolen. Therefore, this kind of product is unable to spread out widely.

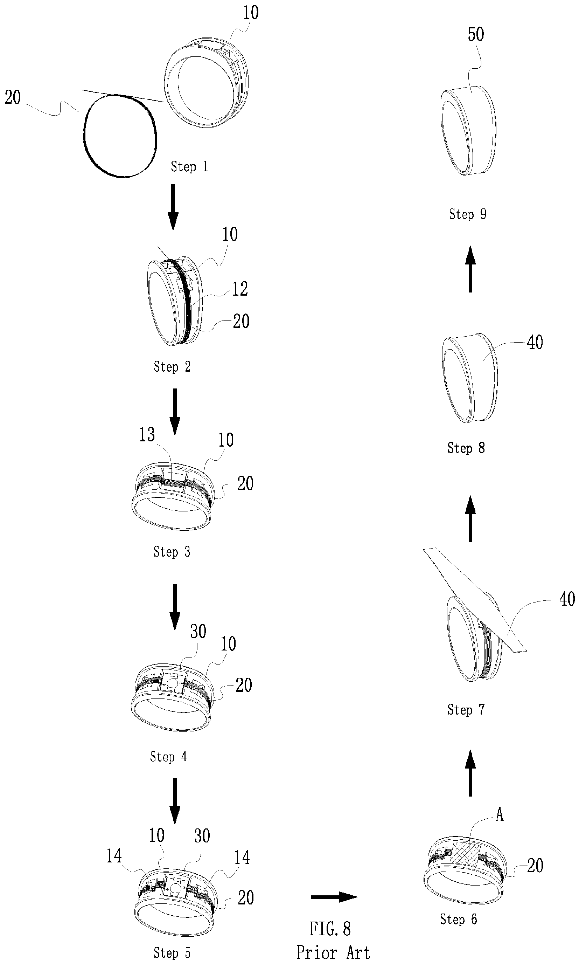

Referring to FIG. 8, it shows a processing flow of a conventional NFC ring using a surrounding antenna coil, including following steps:

### Step 1

A surrounding antenna coil 20 is sheathed into a ring body 10.

### Step 2

The antenna coil 20 is moved into a designated holding groove 12, and a head and a tail of the antenna coil 20 are put on a top of the ring body 10.

### Step 3

The antenna coil 20 on the top is forced into a top groove 13 of the ring body 10 by a jig.

### Step 4

A PCB (Printer Circuit Board) 30 is put in and tightened, and then the head and the tail of the antenna coil 20 are welded on the PCB 30.

### Step 5

The antenna coil 20 is forced into a containing groove 14 at both sides of the ring body 10, and tightly enclosed in the groove of the ring body 10, followed by performing a first functional test.

### Step 6

After passing the first functional test, potting adhesive A is filled into the top groove 13 to seal the PCB 30.

### Step 7

A piece of decorated leather 40 is emplaced.

### Step 8

The decorated leather 40 is attached in the groove of the ring body.

### Step 9

The ring body is packaged by resin glue 50 which is solidified under a normal temperature, and the resin glue 50 can be polished as request, followed by passing a functional test to accomplish the product.

Accordingly, there are still some shortcomings for the abovementioned conventional NFC ring; therefore, this conventional NFC ring is indeed not a good design and needs to be improved.

### SUMMARY OF THE INVENTION

Accordingly, the primary object of the present invention is to provide an NFC ring having a flat-bar FPC and a processing flow thereof.

To achieve the aforementioned object, the present invention discloses an NFC ring body, a flat-bar FPC and crystal glue. By the provision of the flat-bar FPC, the magnetic induction area of the NFC ring can be maximized, and for a same induction area, the access range and the anti-interference efficiency are all better than those of the conventional NFC ring produced by using a surrounding antenna coil. In addition, for the NFC ring produced by using the flat-bar FPC, the processing flow can be simplified to improve the production efficiency and the yield of the product, and the NFC ring can be made more miniaturized.

Furthermore, due to the unique induction method of the NFC ring, the data in the ring can be prevented from being stolen, thereby protecting the consumer's rights.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a three-dimensional schematic view of an NFC ring having a flat-bar FPC, according to the present invention.
FIG. 2 shows a three-dimensional exploded view of the NFC ring having a flat-bar FPC, according to the present invention.
FIG. 3 shows a three-dimensional schematic view of a ring body of the NFC ring having a flat-bar FPC, according to the present invention.
FIG. 4 shows a schematic view of a flat-bar FPC design of the NFC ring having a flat-bar FPC, according to the present invention.
FIG 5 shows a schematic view of a flat-bar FPC design in another profile of the NFC ring having a flat-bar FPC, according to the present invention.
FIG. 6 shows a schematic view of a processing flow of the NFC ring having a flat-bar FPC, according to the present invention.
FIG. 7 shows a schematic view of a processing flow of the NFC ring having a flat-bar FPC in another profile, according to the present invention.
FIG. 8 shows a schematic view of a processing flow of a conventional NFC ring using a surrounding antenna coil.
FIG. 9 shows a schematic view of use of the NFC ring having a flat-bar FPC, according to the present invention.

### DETAILED DESCRIPTION OF THE PREFERRED EMBODIMENTS

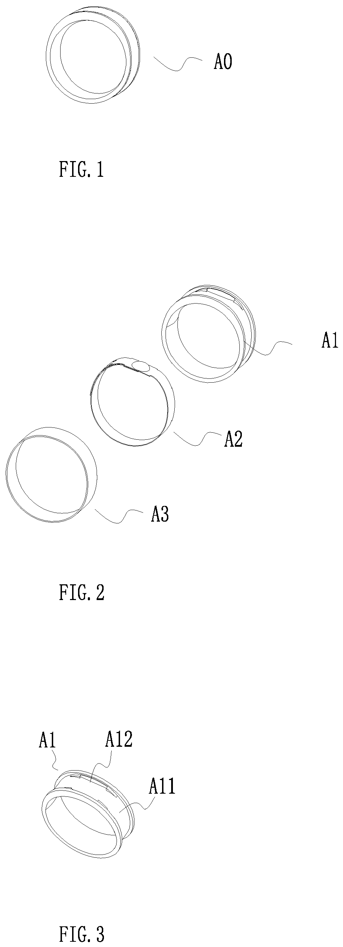

Referring to FIGS. 1 to 4, it shows a three-dimensional schematic view and a three-dimensional exploded view of an NFC ring A0 having a flat-bar FPC, as well as schematic views of the FPC design. The NFC ring A0 having a flat-bar FPC comprises an NFC ring body A1, a flat-bar FPC A2 and crystal glue A3. The ring body A1 is worn on a finger, and an outer annular surface of the ring body A1 is provided with an annular groove A11 to put the flat-bar FPC A2 and fill the crystal glue A3. A top of the ring body A1 is provided with a top groove A12 to position and fix the flat-bar FPC A2.

An interior of the flat-bar FPC A2 that has been already equipped with the anti-interference function is provided with plural antenna beams A21 in an equal length, an IC (Integrated Circuit) A22, a capacitor A23 and plural pads A24, A25. By enclosing the flat-bar FPC A2 on the groove surface of the ring body A1 and welding the plural pads A24, A25, the NFC magnetic induction area can be maximized, thereby improving the signal transmission and reception effect as well as the efficiency in preventing from the interference among the metallic ingredients and the electronic parts on the ring body. In addition, the processing flow of the NFC ring A0 can be simplified to improve the production efficiency and the yield of the product effectively. Furthermore, the NFC ring A0 can be made more miniaturized.

The crystal glue A3 which is solidified under a normal temperature is used to seal the abovementioned components, achieving the purposes of water-proofing and beautification to the product.

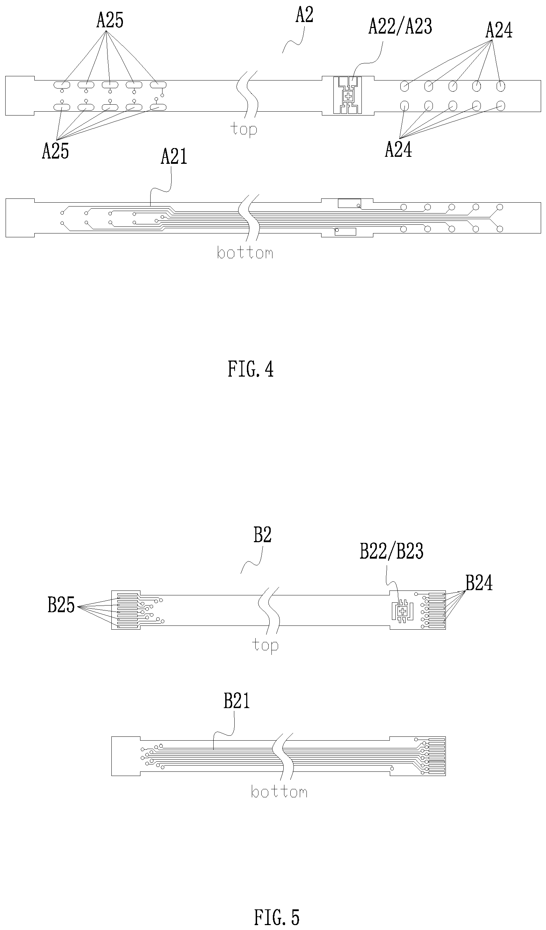

Referring to FIG. 4, it shows a simple schematic view of a wiring layout of the flat-bar FPC A2 of the present invention. An interior of the flat-bar FPC A2 is provided with plural antenna beams A21 in an equal length, an IC A22, a capacitor A23 and plural pads A24, A25.

Referring to FIG. 5, it shows a simple schematic view of a flat-bar FPC B2 in another profile, according to the present invention. An interior of the flat-bar FPC B2 which has been already equipped with the anti-interference function is also provided with plural antenna beams B21 in an equal length, an IC B22, a capacitor B23 and plural pads B24, B25.

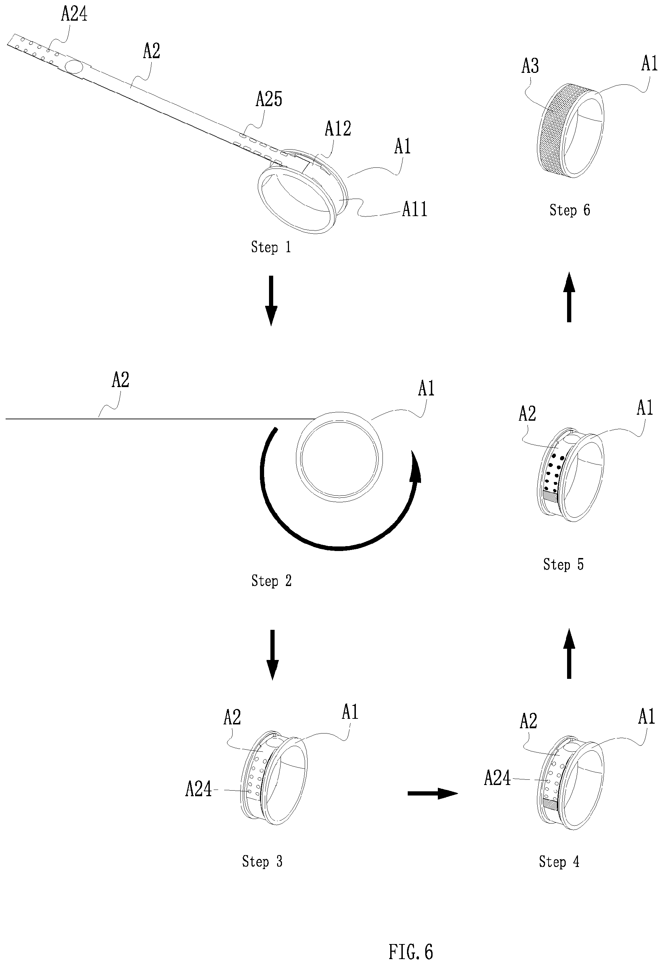

Referring to FIG. 6, it shows a processing flow of an NFC ring having a flat-bar FPC according to the present invention, comprising specifically following steps:

### Step 1

A T-end of a proper flat-bar FPC A2 is put into the top groove A12 of the ring body A1 for positioning and fixation.

### Step 2

The flat-bar FPC A2 is enclosed into the annular groove A11 of the ring body A1 along an arrow on the drawings.

### Step 3

The flat-bar FPC A2 is pulled and enclosed tightly.

### Step 4

A tail end of the annular-shaped flat-bar FPC A2 is fixed to facilitate the subsequent processing procedure.

### Step 5

The plural pads A24, A25 on the flat-bar FPC A2 are welded, and a first functional test of the product is performed.

### Step 6

The crystal glue A3 is filled into the annular groove A11 of the ring body A1 after passing the first functional test, the glue surface is polished as request, and then the product is accomplished after passing a functional test.

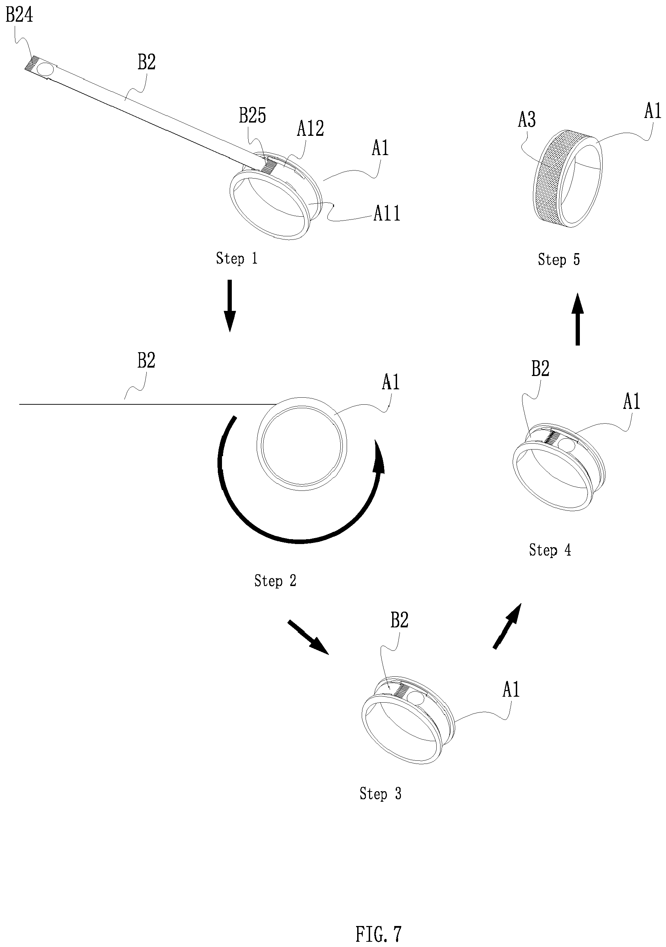

Referring to FIG. 7, it shows a processing flow of an NFC ring having a flat-bar FPC in another profile B2 according to the present invention, comprising specifically following steps:

### Step 1

A small T-end of a proper flat-bar FPC B2 is put into the top groove A12 of the ring body A1 for positioning and fixation.

### Step 2

The flat-bar FPC B2 is enclosed into the annular groove A11 of the ring body A1 along an arrow on the drawings.

### Step 3

The flat-bar FPC B2 is pulled and enclosed tightly, and then fixed.

### Step 4

The plural pads B24, B25 on the flat-bar FPC B2 are welded, and a first functional test of the product is performed.

### Step 5

The crystal glue A3 is filled into the annular groove A11 of the ring body A1 after passing the first functional test, the glue surface is polished as request, and then the product is accomplished after passing a functional test.

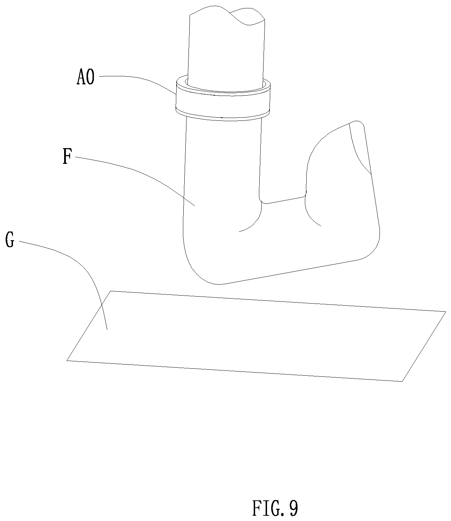

Referring to FIG. 9, it shows a schematic view of wearing and using the NFC ring having a flat-bar FPC according to the present invention. When the NFC ring A0 is worn on a finger F, a user can bend the finger to allow the ring A0 to approach an induction area G. This induction method can prevent effectively the data in the ring from being stolen.

Accordingly, by comparing the processing flow of the present invention with the processing flow of a conventional NFC ring using a surrounding antenna coil, one can easily find out the advancement of the present invention that the production efficiency and the yield of the product are improved effectively and accurately, as well as that the processing flow is more simplified.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. An near field communication ring having a flat-bar flexible printed circuit, comprising:
a flat-bar FPC (A2) is equipped with anti-interference function, with an interior of the flat-bar FPC (A2) being provided with plural antenna beams (A21), an IC (Integrated Circuit) (A22), a capacitor (A23) and plural pads (A24, A25); wherein a crystal glue (A3) is filled into a containing groove (A11), an outer annular surface of a ring body (A1) is provided with the groove (A11) for installing the flat-bar FPC (Flexible Printed Circuit) (A2) and the crystal glue (A3).

2. A processing flow of the near field communication ring having a flat-bar flexible printed circuit, comprising steps of:
a) putting a T-end of a proper flat-bar FPC (A2) into a top groove (A12) of a ring body (A1) for positioning and fixation;
b) enclosing the flat-bar FPC (A2) into a containing groove (A11) of the ring body (A1);
c) pulling the flat-bar FPC (A2) to enclose the flat-bar FPC (A2) tightly;
d) fixing a tail end of the annular-shaped flat-bar FPC (A2) to facilitate subsequent processing procedure;
e) welding the plural pads (A24, A25) on the flat-bar FPC (A2) and performing a first functional test of product;
f) filling crystal glue (A3) into the containing groove (A11) after passing the first functional test, polishing a glue surface as request and passing a functional test to accomplish the product.

3. A processing flow of the near field communication ring having a flat-bar flexible printed circuit, comprising steps of:
a) putting a small T-end of a proper flat-bar FPC (B2) into a top groove (A12) of a ring body (A1) for positioning and fixation;
b) enclosing the flat-bar FPC (B2) into a containing groove (A11) of the ring body (A1) along an arrow on drawings;
c) pulling the flat-bar FPC (B2), so that the flat-bar FPC (B2) is enclosed tightly and then fixed;
d) welding plural pads (B24, B25) on the flat-bar FPC (B2) and performing a first functional test of product;
e) filling a crystal glue (A3) into the containing groove (A11) after passing the first functional test, polishing a glue surface as request and passing a functional test to accomplish the product.
